# EUROPÄISCHE PATENTSCHRIFT

(11) **EP 1 910 671 B1**
(45) Veröffentlichungstag und Bekanntmachung des Hinweises auf die Patenterteilung: **12.10.2016**
(21) Anmeldenummer: 06791558.7
(22) Anmeldetag: 02.08.2006
(51) Int. Cl.: F04B 1/20, F01B 3/00

(54) **AXIALKOLBENMASCHINE MIT EINEM LÄNGLICHEN FÜHRUNGSELEMENT FÜR EIN KÄFIGSEGMENT**
AXIAL PISTON MACHINE HAVING AN ELONGATED GUIDE ELEMENT FOR A CAGE SEGMENT
MOTEUR A PISTONS AXIAUX COMPRENANT UN ELEMENT DE GUIDAGE LONGITUDINAL POUR SEGMENT DE CAGE

(30) Priorität: 04.08.2005 DE 102005036853
(43) Veröffentlichungstag der Anmeldung: 16.04.2008
(73) Patentinhaber: Bosch Rexroth AG, 70184 Stuttgart (DE)
(72) Erfinder: SCHNIEDERJAN, Reinhold, 89233 Neu-Ulm (DE); KREJA, Jerzy, 89278 Nersingen (DE)
(74) Vertreter: Körfer, Thomas
(86) Internationale Anmeldenummer: PCT/EP2006/007653
(87) Internationale Veröffentlichungsnummer: WO 2007/014768

(56) Entgegenhaltungen:
- EP-A1- 0 649 974
- DE-C- 300 922
- DE-U- 7 515 346
- FR-A1- 2 353 747
- JP-A- 2005 226 551
- SU-A1- 823 626

## Beschreibung

Die Erfindung betrifft eine Axialkolbenmaschine nach dem Oberbegriff des Anspruchs 1.

Bei Axialkolbenmaschinen in Schrägscheibenbauart ist es bekannt, eine Schrägscheibe an einem von zwei Schwenklagerteilen auszubilden, die an zwei einander zugewandten Seiten kreisbogenabschnittförmig gekrümmte Führungsflächen aufweisen, zwischen denen ein kreisbogenabschnittförmiger Spalt vorhanden ist, in dem ein Käfigsegment mit mehreren Wälzkörpern gelagert ist. Hierbei handelt es sich um eine Axialkolbenmaschine veränderliches Durchsatzvolumen, deren Schrägscheibe im vorbeschriebenen sogenannten Wiegenlager durch eine Verstellvorrichtung hin und her verschwenkbar ist. Bei solchen Schwenkbewegungen in der Umfangsrichtung der kreisbogenförmigen Krümmung wird auch das Käfigsegment in die Kreisbogenrichtung bewegt, wobei dessen Bewegungslänge aufgrund der Abrollfunktion der Wälzkörper im Wesentlichen nur halb so groß ist wie die Schwenkbewegung der Schrägscheibe. Im Betrieb der Axialkolbenmaschine ist es insbesondere bei schnellen Hin- und Herbewegungen der Schrägscheibe nicht auszuschließen, dass das Käfigsegment sich bezüglich seines ihm zugehörigen Schwenkbereichs in der Kreisbogenrichtung verlagert. Dies ist unerwünscht, weil das Käfigsegment dabei seine anzustrebende Lagerposition verliert.

Um solche Lageveränderungen des Käfigsegments zu vermeiden, ist es bekannt, das Käfigsegment durch eine Führungsvorrichtung mit einem länglichen Führungselement in seiner gewünschten Schwer 1a zu sichern.

Die DE 75 15 346 U beschreibt zum Beispiel ein Schrägscheiben-Schwenklager für eine hydraulische Axialkolbenmaschine, bei der zwischen der hohlzylindrischen Lagerfläche für die Schrägscheibe im Gehäuse und der zylindrischen Lagerfläche der Schrägscheibe Wälzlagersegmente angeordnet sind, die in bogenförmigen Käfigen gehalten sind. An den bogenförmigen Käfigen ist ein Führungselement radial verschiebbar und schwenkbar angelenkt. Ein Ende des Führungselements ist ortsfest an einer Stelle des Gehäuses schwenkbar gelagert, das andere Ende des Führungselements ist schwenkbar und in seiner Längsrichtung verschiebbar an der Schrägscheibe angeordnet.

Eine in der EP 0 649 974 B1 beschriebene Führungsvorrichtung weist ein längliches Führungselement auf, das aus einem einstückigen an einem dieser Teile gegen eine Bewegung in seiner Längsrichtung gehalten sein muss, wobei eine solche Halterung an einem der beiden Schwenklagerteile angeordnet sein kann.

Weiteren Führungsvorrichtungen für Axialkolbenmaschinen sind aus FR2353747 und SU823626 bekannt.

Bei der erfindungsgemäßen Axialkolbenmaschine in Schrägscheibenbauart mit einem an einem Gehäuse abgestützten ersten Schwenklagerteil und einem daran um eine Schwenkachse schwenkbar gelagerten und eine Schrägscheibe bildenden zweiten Schwenklagerteil, weisen die Schwenklagerteile an einander zugewandten Seiten kreisbogenabschnittförmig gekrümmte Lagerflächen auf, zwischen denen ein Spalt angeordnet ist. In diesem Spalt ist ein Käfigsegment mit mehreren Wälzkörpern ebenfalls um die Schwenkachse schwenkbar gelagert. Das Käfigsegment wird durch ein längliches sich quer zum Spalt erstreckendes und den Spalt überragendes Führungselement geführt. Das Führungselement ist jeweils durch ein Drehlager mit dem Käfigsegment und einem der Schwenklagerteile verbunden.

Das Führungselement ist im Bereich seines das Käfigsegment verbindenden Drehlagers durch eine Längsführung in seiner Längsrichtung verschiebbar mit dem Käfigsegment verbunden. Im Bereich seines mit dem einen Schwenklagerteil verbundenen Endbereichs ist es drehbar durch das zugehörige Drehlager drehbar und in seiner Längsrichtung unverschiebbar mit dem einen Schwenklagerteil verbunden. Dabei weist das Führungselement an einem seiner Enden einen runden Führungskopf auf, mit dem es in einer Kulissenführung schwenkbar gelagert ist, die an dem anderen Schwenklagerteil oder Anbauteilen derselben angeordnet ist. Das Führungselement ist drehbar und in seiner Längsrichtung unverschiebbar mit dem schwenkbaren und die Schrägscheibe bildenden Schwenklagerteil verbunden. Dabei sind wenigstens zwei Führungselemente in der Schwenkrichtung winkelversetzt zueinander angeordnet.

Diese Ausgestaltung ermöglicht eine einfache, kleine und insbesondere schmale Konstruktion für die Käfigsegmentführung bzw. für das Führungselement. Hierbei ist zu berücksichtigen, dass es im Bereich des das Käfigsegment verbindenden Gelenks keiner Umschlingung eines Gelenkbolzen bedarf, wie es beim Stand der Technik der Fall ist. Anstelle einer Umschlingung ist eine Längsführung für das Führungselement im Bereich dieses Drehlagers vorhanden, die sich in einfacher und kleiner Konstruktion durch ein Führungsloch in einem Drehbolzen realisieren lässt, in dem das Führungselement in seiner Längsrichtung hin- und her verschiebbar ist.

Im Bereich des der Kulissenführung abgewandten Endes des Führungselements lässt sich das dort vorhandene Drehlager ebenfalls in einfacher und schmaler Konstruktion dadurch realisieren, dass das Drehlager durch einen im Wesentlichen rechtwinklig abstehenden Schenkel gebildet ist, der drehbar in einem Lagerloch in dem einen Schwenklagerteil gelagert ist.

Es ist im Weiteren vorteilhaft, den der Kulissenführung zugehörigen Endbereich des Führungselements als runde Drahtschleife auszubilden, deren Erstreckungsebene sich vorzugsweise rechtwinklig zur Schwenkachse des Schwenklagers bzw. des Lagerschenkels erstreckt. Auch diese Ausgestaltung lässt sich in einfacher und schmaler Konstruktion verwirklichen, wobei die erforderliche Konstruktionsbreite kaum größer ist als die Querschnittsabmessung des Führungselements. Dies lässt sich vorzugsweise durch einen im Querschnitt runden Draht verwirklichen, der vorzugsweise einteilig ausgebildet ist und dessen Drahtschleife bzw. Lagerschenkel durch Biegen und Formen einteilig angeformt sind.

Es ist aus Gründen einer günstigen Platzausnutzung vorteilhaft, die Kulissenführung für das eine Ende des länglichen Führungselements an dem eine Gehäusebasis bildenden Schwenklagerteil auszubilden und das der Kulissenführung abgewandte Drehlager am schwenkbaren Schwenklagerteil auszubilden.

Die Kulissenführung lässt sich vorteilhaft durch eine den runden Gelenkkopf aufnehmende Bohrung, insbesondere eine Sackbohrung ausbilden. Diese lässt sich an der Gehäusebasis deshalb besonders günstig realisieren, weil die Gehäusebasis eine breitere Querschnittsabmessung aufweist als das schwenkbare Schwenklagerteil und deshalb die Lagerbohrung bei Gewährleistung einer kleinen Konstruktion realisierbar ist.

Um die Stabilität der Käfigsegmentführung zu vergrößern, können an einer oder an beiden Seiten der Axialkolbenmaschine zwei Käfigsegmentführungen in der Schwenkrichtung voneinander beanbstandet angeordnet sein, die insbesondere gleich ausgebildet und bezüglich einer rechtwinklig zur Schwenkachse verlaufenden Längsmittelebene der Axialkolbenmaschine spiegelbildlich ausgebildet und angeordnet sein können.

Nachfolgend werden vorteilhafte Ausgestaltungen der Erfindung anhand von Ausführungsbeispielen und Zeichnungen näher erläutert. Es zeigt:
- Fig. 1: eine erfindungsgemäße Axialkolbenmaschine im axialen Schnitt;
- Fig. 2: ein Schwenklager der Axialkolbenmaschine mit einer Käfigsegmentführung in vergrößerter Darstellung, wobei das Schwenklager sich in seiner minimal ausgeschwenkten Stellung der Null-Schwenkstellung befindet;
- Fig. 3: das Schwenklager in einer seiner maximal ausgeschwenkten Schwenkstellung.

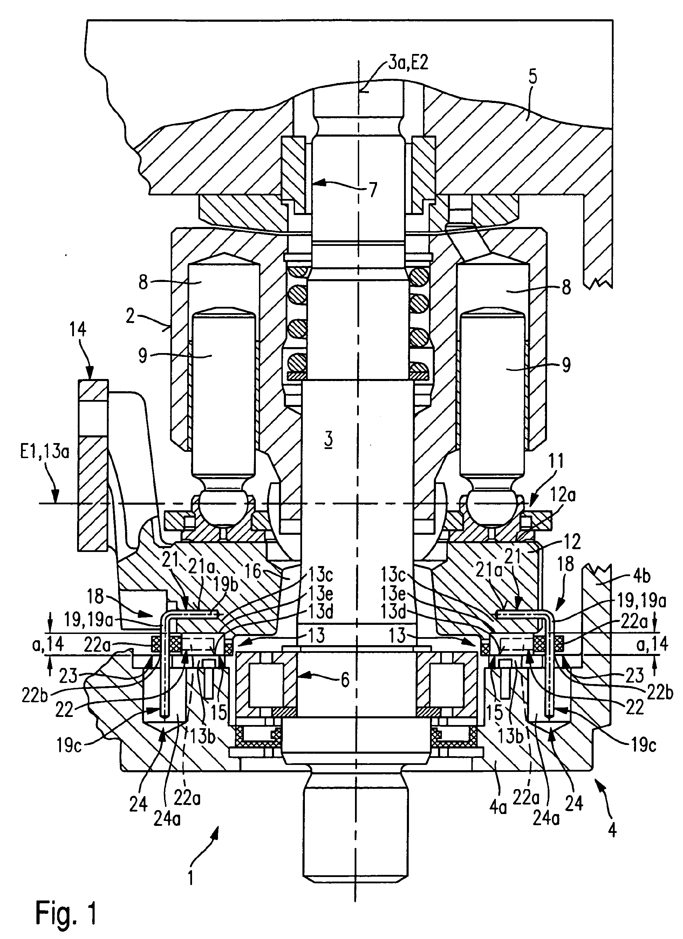

Gemäß Fig. 1 zeigt die in ihrer Gesamtheit mit 1 bezeichnete Axialkolbenmaschine mit einer Zylindertrommel 2, die mit einem passenden axialen Loch auf einer Welle 3 drehfest sitzt und mit der Welle 3 drehbar in einem andeutungsweise dargestellten Gehäuse 4 gelagert ist.

Das Gehäuse weist z. B. eine Gehäusebasis 4a auf, von der sich eine teilweise dargestellt Umfangswand 4b topfförmig zu einem Deckel 5 erstreckt, der das topfförmige Gehäuse 4 verschließt und als sogenanntes Anschlussteil für Zu- und Abführungsleitungen eines hydraulischen Leitungskreises ausgebildet ist. Die Welle 3 ist in Drehlagern 6, 7 an der Gehäusebasis 4a und dem Deckel 5 drehbar gelagert, wobei sie je nach Verwendung der Axialkolbenmaschine als Pumpe oder als Motor eine Antriebswelle oder Abtriebswelle bildet.

In der Zylindertrommel 2 sind auf einem Umfang verteilt mehrere Zylinderbohrungen 8 angeordnet, die sich parallel zur Drehachse 3a der Welle 3 oder auch dazu geneigt erstrecken können, und in denen Kolben 9 hin- und her verschiebbar gelagert sind, die die Zylindertrommel 2 an ihrer dem Deckel 5 abgewandten Seite überragen und mittels Gleitschuhen 11 an einer Schrägscheibe 12 abgestützt sind. Die Schrägscheibe 12 ist in einem Schwenklager 13 um eine Schwenkachse 13a hin- und her schwenkbar gelagert ist, die sich in einer Querebene E1 erstreckt, die rechtwinklig zur die Drehachse 3a enthaltenden Axialebene E2 verläuft.

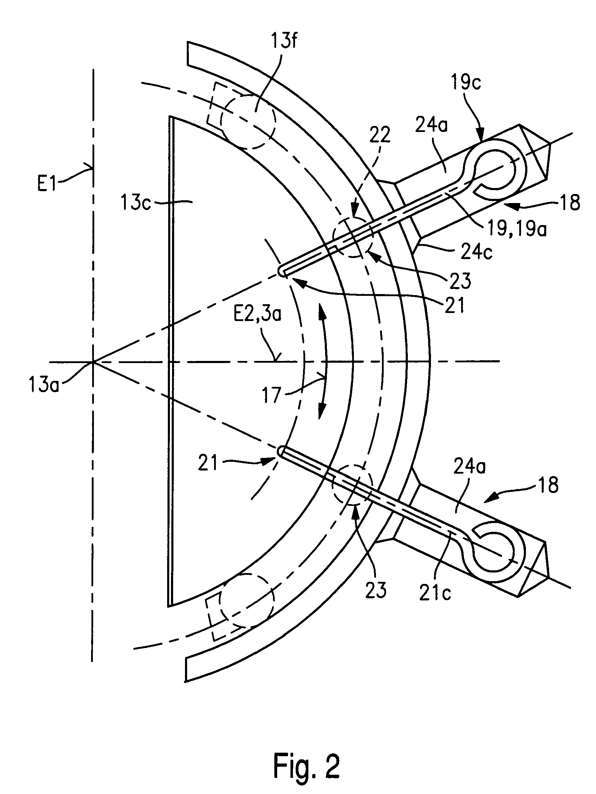

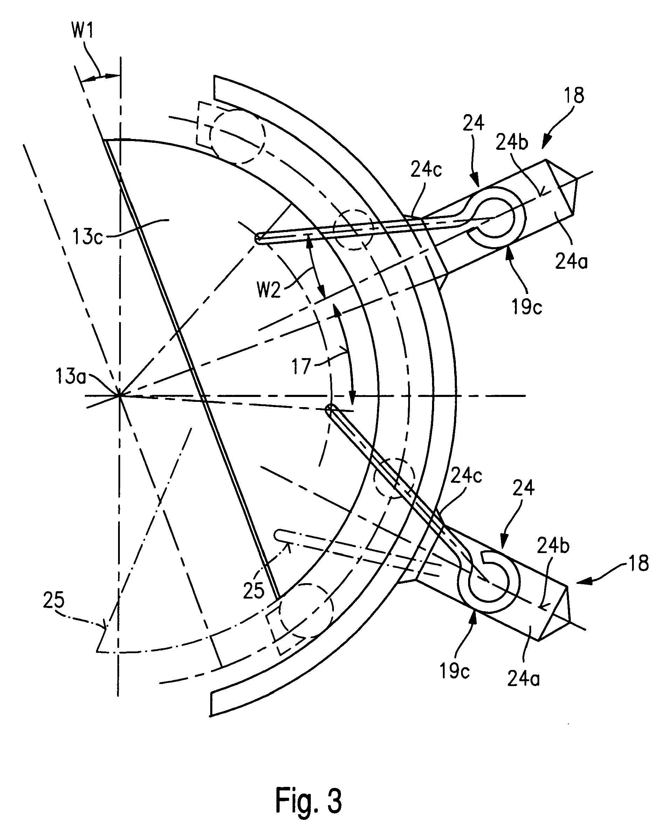

Durch ein Schwenken der Schrägscheibe 12 mittels eines nur andeutungsweise dargestellten Verstellgliedes 14 lässt sich das Durchsatzvolumen der Axialkolbenmaschine 1 wahlweise verringern oder vergrößern. In der Null-Schwenkstellung gemäß Fig. 2 sind die axiale Kolbenbewegung und das Durchsatzvolumen Null oder zumindest sehr gering. In der um den Schwenkwinkel W1 maximal ausgeschwenkten Schwenkstellung gemäß Fig. 3 sind die Kolbenbewegungen und das Durchsatzvolumen maximal.

Die Schrägscheibe 12 ist in dem durch zwei Schwenklagerteile 13b, 13c gebildeten Schwenklager 13 schwenkbar gelagert, die längs der Drehachse 3a nebeneinander angeordnet sind und an ihren einander zugewandten Seiten jeweils zu beiden Seiten der Welle 3 zwei kreisbogenabschnittförmig gekrümmte Lagerflächen 13d, 13e aufweisen, die einen sich parallel zur Drehachse 3a erstreckenden Abstand a voneinander aufweisen. In dem so gebildeten Spalt 14 ist ein Käfigsegment 15 mit mehreren Wälzkörpern 13f angeordnet. Am Ausführungsbeispiel sind die Lagerflächen zylinderabschnittförmig und die Wälzkörper 13f zylinderförmig ausgebildet. Das radial äußere Schwenklagerteil 13b kann durch zwei Lagerschalen gebildet sein, die auf beiden Seiten der Drehachse 3a seitlich geführt und stiftzentriert innen an der Gehäusebasis 4a angeordnet sind.

Im Rahmen der Erfindung können die beiderseits der Welle 3 vorhandenen Lagerflächen 13d, 13e auch jeweils durch eine gemeinsame Lagerfläche gebildet sein, die die Welle 3 in einem Durchführungsloch 16 durchfasst, das in der Schwenkrichtung gemäß dem Doppelpfeil 17 z. B. als Langloch so groß ausgerichtet ist, dass das schwenkbare Schwenklagerteil 13c seine Schwenkbewegungen auszuführen vermag.

Beim Ausführungsbeispiel bildet das schwenkbare Schwenklagerteil 13c die Schrägscheibe 12, wobei die ebene Gleitfläche 12a der Schrägscheibe 12 und die zugehörige Lagerfläche bzw. Lagerflächen 13e auf einander abgewandten Seiten der Schrägscheibe 12 angeordnet sind.

Im Funktionsbetrieb der Axialkolbenmaschine 1 ist beim Schwenken der Schrägscheibe 12 der Schwenkweg des Käfigsegments 15 jeweils etwa halb so groß, wie der Schwenkweg der Schrägscheibe 12. Dies ist durch das Abwälzen der Wälzkörper 13f vorgegeben. Da zwischen den Schwenklagerteilen 13b, 13c und den Wälzkörpern 13f keine Formschlussverbindung vorhanden ist, besteht die Gefahr, dass insbesondere bei plötzlichen und schnellen Schwenkbewegungen das Käfigsegment 15 seine Position bezüglich den Schwenklagerteilen 13b, 13c in die eine oder andere Schwenkrichtung verlagert, sozusagen verrutscht. Hierdurch wird das Schwenklager 13 beeinträchtigt.

Um dies zu vermeiden, ist dem bzw. den Käfigsegmenten 15 jeweils eine in ihrer Gesamtheit mit 18 bezeichnete Führungsvorrichtung mit einem länglichen Führungselement 19 zugeordnet, das den Spalt 14 überquert und jeweils schwenkbar und teilweise auch in seiner Längsrichtung bewegbar mit dem Käfigsegment 15 und den Schwenklagerteilen 13b, 13c verbunden ist und somit in der Lage ist, das Käfigsegment 15 in seiner gewünschten Position bezüglich den Schwenklagerteilen 13b, 13c zu halten und im Schwenkbetrieb bei seiner Schwenkbewegung zu führen bzw. zu steuern.

Das Führungselement 19 ist ein längliches, insbesondere stiftförmiges, Bauteil, das beim Ausführungsbeispiel durch ein Profilstück, z. B. in Form eines Drahtes 19a, insbesondere aus Metal wie Stahl, besteht. Die Querschnittsform des Führungselements 19 ist vorzugsweise kreisrund. Es ist an einem seiner beiden Enden durch ein Drehlager 21 mit einem Lagerloch 21a schwenkbar gelagert, das sich parallel zur Schwenkachse 13a erstreckt und in dem ein quer vom Führungselement 19 abstehender Lagerschenkel 21b schwenkbar gelagert ist. Der Lagerschenkel 21b ist vorzugsweise ein vom Draht 19a rechtwinklig abgebogener Längsabschnitt. In diesem ersten Drehlager 21 ist das Führungselement 19 in seiner Längsrichtung unbeweglich am schwenkbaren Schwenklagerteil 13c gelagert.

Das Führungselement 19 ist durch ein zweites Drehlager 22 mit dem Käfigsegment 15 um eine sich parallel zur Schwenkachse 13a erstreckende Drehachse schwenkbar gelagert, wobei dieses zweite Drehlager 22 mit einer Längsführung 23 für das Führungselement 19 kombiniert ist, so dass das Führungselement 19 während einer Drehbewegung im zweiten Drehlager 22 eine längs gerichtete Bewegung in seine eine oder andere Längsrichtung ausführen kann.

Das zweite Drehlager 22 ist durch einen Drehzapfen 22a gebildet, der um eine sich parallel zur Schwenkachse 13a erstreckende Gelenkachse schwenkbar am zugehörigen Käfigsegment 15 drehbar gelagert ist, wobei das Führungselement 19 den Drehzapfen 22a mit geringem Bewegungsspiel in einem Führungsloch 22b durchfasst. Hierdurch ist die Längsführung 23 gebildet.

Das Führungselement 19 ist in seinem dem ersten Drehlager 21 abgewandten Endbereich durch eine Kulissenführung 24 mit dem nicht schwenkbaren Schwenklagerteil 13b verbunden. Die Kulissenführung 24 ist durch nur zwei Führungselemente gebildet, nämlich durch einen runden Gelenkkopf 19c, der in einer Ausnehmung 24a, insbesondere einer von innen zugänglichen und nach außen dichten Sackausnehmung, mit zwei einander gegenüberliegenden und den Gelenkkopf 19c mit geringem Bewegungsspiel begrenzenden Ausnehmungswänden am nicht schwenkbaren Schwenklagerteil 13b gelagert ist.

Bei einer Ausgestaltung, bei der sich das Führungselement 19 seitlich neben dem nicht schwenkbaren Drehlagerteil 13b befindet, kann die Ausnehmung 24a durch vom Schwenklagerteil 13b etwa parallel abstehende Wände gebildet sein. Beim Ausführungsbeispiel, bei dem das nicht schwenkbare Schwenklagerteil 13b die Drehlager 21, 22 seitlich überragt, ist die Ausnehmung 24a durch eine Bohrung gebildet, die vorzugsweise von innen in das nicht schwenkbare Schwenklagerteil 13b bzw. in die Gehäusebasis 4 eingebohrt ist.

Der runde Gelenkkopf 19c ist durch einen Ring gebildet, vorzugsweise durch eine einteilig gebogene Schleife des Führungselements 19, wobei die Ring- bzw. Schleifenebene sich parallel zur Schwenkebene und rechtwinklig zum Lagerschenkel 21b erstreckt. Bei der vorbeschriebenen Ausgestaltung ist das Führungselement 19 mit dem Drehzapfen 22a durch einen einteilig gebogenen Draht gebildet, der sich durch geringen Materialverbrauch, geringes Gewicht und durch eine verhältnismäßig große Festigkeit auszeichnet.

Im Funktionsbetrieb der Axialkolbenmaschine 1 kann das schwenkbare Schwenklagerteil 13c durch die mit 14 nur angedeutete Verstellvorrichtung zwischen der in der Fig. 2 dargestellten Null-Stellung und in der Fig. 3 dargestellten maximal ausgeschwenkten Schwenkstellung hin und her verstellt werden. Dabei wird das Führungselement 19 zwangsläufig mitgeschwenkt, wobei es in jeder wahlweisen Schwenkstellung seine Führungsfunktion auf das Käfigsegment 15 ausübt.

Die Axialkolbenmaschine ist vorzugsweise so ausgebildet, dass in der Null-Stellung des schwenkbaren Schwenklagerteils 13c das Führungselement 19 sich bezüglich seiner Mittelachse 21c in einer radialen Stellung zur Schwenkachse 13a und somit bezüglich der Mittelachse 24b der Kulissenführung 24 sich in einer Null-Stellung befindet.

Für eine Axialkolbenmaschine 1, deren schwenkbares Schwenklagerteil 13b sich über die Null-Stellung hinaus in die in der Fig. 3 angedeutete gegenüberliegende maximale Schwenkstellung schwenkbar ist, lässt sich auch das Führungselement 19 über seine Null-Stellung hinaus in seine gegenüberliegende maximale Schwenkstellung schwenken, die in Fig. 3 angedeutet und mit 25 bezeichnet ist. Um bei einer möglichst geringen Querschnittsgröße der Kulissenführung 24 einen möglichst großen maximalen Schwenkwinkel W2 zu erreichen, ist es vorteilhaft, am Rand der die Kulissenführung 24 bildenden Ausnehmung 24a bzw. der Bohrung eine Kantenbrechung 24c auszubilden, die einen größeren maximalen Schwenkwinkel W2 ermöglicht, wie es Fig. 3 zeigt.

Um bei einer wünschenswert kleinen Konstruktion der Führungsvorrichtung 18 bzw. des Führungselements 19 verhältnismäßig große Führungskräfte zur Verfügung zu haben, ist es vorteilhaft, mehrere, z. B. zwei in der Umfangsrichtung versetzt zu einander angeordnete Führungsvorrichtung 18 vorzusehen, wodurch die Führungskraft verdoppelt wird. Beim Ausführungsbeispiel sind die Führungsvorrichtungen 18 bezüglich der Drehachse 3a der Axialkolbenmaschine nach beiden Seiten hin gleichmäßig winkelversetzt angeordnet.

Im Übrigen lassen sich beim vorliegenden Ausführungsbeispiel, bei dem zu beiden Seiten der Welle 3 Schwenklager 13 mit zwei voneinander unabhängigen Käfigsegmenten 15 vorgesehen sind, auf beiden Seiten jeweils ein oder mehrere, z. B. zwei in der Schwenkrichtung versetzte Führungsvorrichtungen 18 mit Führungselementen 19 vorsehen, die insbesondere gleich und bezüglich der sich rechtwinklig zur Schwenkachse 13a erstreckenden und die Drehachse 3a enthaltenden Längsmittelebene E2 vorzugsweise spiegelbildlich ausgebildet und angeordnet sind.

## Patentansprüche

1. Axialkolbenmaschine (1) in Schrägscheibenbauart, mit einem an einem Gehäuse abgestützten ersten Schwenklagerteil (13b) und einem daran um eine Schwenkachse (13a) schwenkbar gelagerten und eine Schrägscheibe (12) bildenden zweiten Schwenklagerteil (13c),
wobei die Schwenklagerteile (13b, 13c) an einander zugewandten Seiten kreisbogenabschnittförmig gekrümmte Lagerflächen (13d, 13e) aufweisen, zwischen denen ein Spalt (14) angeordnet ist, in dem ein Käfigsegment (15) mit mehreren Wälzkörpern (13f) ebenfalls um die Schwenkachse (13a) schwenkbar gelagert ist,
wobei das Käfigsegment (15) durch ein längliches sich quer zum Spalt (14) erstreckendes und den Spalt (14) überragendes Führungselement (19) geführt ist,
wobei das Führungselement (19) jeweils durch ein Drehlager (21, 22) schwenkbar mit dem Käfigsegment (15) und einem der Schwenklagerteile (13c) verbunden ist, und
wobei das Führungselement (19) im Bereich seines mit dem Käfigsegment (15) verbundenen Drehlagers (22) durch eine Längsführung (23) in seiner Längsrichtung verschiebbar mit dem Käfigsegment (15) verbunden ist und im Bereich seines mit dem einen Schwenklagerteil (13c) verbundenen Endbereichs durch das zugehörige Drehlager (21) drehbar und in seiner Längsrichtung unverschiebbar mit dem einen Schwenklagerteil (13c) verbunden ist,
**dadurch gekennzeichnet,**
**dass** das Führungselement (19) an einem seiner Enden einen runden Führungskopf (19c) aufweist, mit dem es in einer Kulissenführung (24) schwenkbar gelagert ist, die an einem anderen Schwenklagerteil (13b) oder Anbauteilen derselben angeordnet ist, und das Führungselement (19) drehbar und in seiner Längsrichtung unverschiebbar mit dem schwenkbaren und die Schrägscheibe (12) bildenden Schwenklagerteil (13c) verbunden ist und wenigstens zwei Führungselemente (19) in der Schwenkrichtung winkelversetzt zueinander angeordnet sind.

2. Axialkolbenmaschine nach Anspruch 1,
**dadurch gekennzeichnet,**
**dass** das zwischen dem Führungselement (19) und dem einen Schwenklagerteil (13c) wirksame Drehlager (22) durch ein sich im wesentlichen parallel zur Schwenkachse (13a) im einen Schwenklagerteil (13c) erstreckendes Lagerloch (21a) gebildet ist, in dem ein vom Führungselement (19) quer abstehender Lagerschenkel (19b) schwenkbar gelagert ist.

3. Axialkolbenmaschine nach Anspruch 1 oder 2,
**dadurch gekennzeichnet,**
**dass** der Führungskopf (19c) durch einen Ring oder eine ringförmige Schleife gebildet ist.

4. Axialkolbenmaschine nach einem der vorherigen Ansprüche,
**dadurch gekennzeichnet,**
**dass** das zwischen den Führungselement (19) und dem Käfigsegment (15) wirksame Drehlager (22) durch einen vom Käfigsegment (15) abstehenden Drehzapfen (22a) gebildet ist, der drehbar im Käfigsegment (15) gelagert ist, und in dem ein quer verlaufendes Führungsloch (22b) angeordnet ist, in dem das Führungselement (19) in seiner Längsrichtung hin- und her verschiebbar geführt ist.

5. Axialkolbenmaschine nach einem der vorherigen Ansprüche,
**dadurch gekennzeichnet,**
**dass** das Führungselement (19) als ein sich zwischen dem Führungskopf (19c) und dem Drehlager (21), durch das es mit dem einen Schwenklagerteil (13c) verbunden ist, gerade erstreckender prismatischer Stift vorzugsweise runden Querschnitts ausgebildet ist.

6. Axialkolbenmaschine nach einem der vorherigen Anprüche,
**dadurch gekennzeichnet,**
**dass** das Führungselement (19) einteilig hergestellt ist.

7. Axialkolbenmaschine nach einem der vorherigen Ansprüche,
**dadurch gekennzeichnet,**
**dass** das Führungselement (19) aus Metall, insbesondere Stahl, besteht.

8. Axialkolbenmaschine nach Anspruch 7,
**dadurch gekennzeichnet,**
**dass** das Führungselement (19) aus einem Draht gebogen ist.

9. Axialkolbenmaschine nach einem der vorherigen Ansprüche,
**dadurch gekennzeichnet,**
**dass** in einer eingeschwenkten Null-Stellung des schwenkbaren Schwenklagerteils (13c) das Führungselement (19) und die Kulissenführung (24) sich bezüglich der Schwenkachse (13a) radial erstrecken.

10. Axialkolbenmaschine nach einem der vorherigen Ansprüche,
**dadurch gekennzeichnet,**
**dass** auf beiden Seiten einer im Gehäuse (4) drehbar gelagerten Welle (3), die die Schrägscheibe (12) in einem Durchführungsloch (16) durchsetzt, jeweils kreisbogenabschnittförmig gekrümmte Lagerflächen (13d, 13e) mit dazwischen angeordneten Käfigsegmenten (15) angeordnet sind und die Käfigsegmente (15) durch spiegelbildlich zueinander angeordnete Führungselemente (19) geführt sind.

## Claims

1. Axial piston machine (1) of swash plate type, with a first swivel bearing part (13b) supported on a housing and a second swivel bearing part (13c) mounted thereon so as to be able to swivel about a swivel axis (13a) and forming a swash plate (12),
wherein on sides which face one another the swivel bearing parts (13b, 13c) exhibit bearing surfaces (13d, 13e) which are curved in the form of a portion of an arc of a circle and between which there is a gap (14) in which a cage segment (15) with a plurality of roller bodies (13f) is mounted so as to also be able to swivel about the swivel axis (13a),
wherein the cage segment (15) is guided by an elongated guide element (19) which extends transversely to the gap (14) and projects over the gap (14),
wherein the guide element (19) is in each case connected by a pivot bearing (21, 22) so as to be able to swivel with the cage segment (15) and one of the swivel bearing parts (13c), and
wherein the guide element (19) in the region of its pivot bearing (22) connected with the cage segment (15) is connected with the cage segment (15) by a longitudinal guide (23) so as to be displaceable in its longitudinal direction and in the region of its end portion connected with one swivel bearing part (13c) is connected with the one swivel bearing part (13c) so as to be able to pivot through the associated pivot bearing (21) and so as to be immovable in its longitudinal direction,
**characterised in that**
at one of its ends the guide element (19) exhibits a round guide head (19c) with which it is mounted so as to be able to swivel in a slide guide (24) which is arranged on another swivel bearing part (13b) or parts attached thereto, and the guide element (19) is connected with the swivelling swivel bearing part (13c) forming the swash plate (12) so as to be able to pivot and so as to be immovable in its longitudinal direction, and at least two guide elements (19) are arranged so as to be angularly offset in relation to one another in the swivelling direction.

2. Axial piston machine according to claim 1,
**characterised in that**
the pivot bearing (22) acting between the guide element (19) and the one swivel bearing part (13c) is formed by a bearing hole (21a) which extends essentially parallel to the swivel axis (13a) in the one swivel bearing part (13c) and in which a bearing limb (19b) protruding transversely from the guide element (19) is mounted so as to be able to swivel.

3. Axial piston machine according to claim 1 or 2,
**characterised in that**
the guide head (19c) is formed by a ring or a ring-shaped loop.

4. Axial piston machine according to one of the preceding claims,
**characterised in that**
the pivot bearing (22) acting between the guide element (19) and the cage segment (15) is formed by a pivot journal (22a) which protrudes from the cage segment (15) and is mounted in the cage segment (15) so as to be able to pivot, and in which is arranged a guide hole (22b) which runs transversely and in which the guide element (19) is guided so as to be movable to and fro in its longitudinal direction.

5. Axial piston machine according to one of the preceding claims,
**characterised in that**
the guide element (19) is embodied in the form of a prismatic pin, preferably of round cross-section, which extends in a straight line between the guide head (19c) and the pivot bearing (21) through which it is connected with the one swivel bearing part (13c).

6. Axial piston machine according to one of the preceding claims,
**characterised in that**
the guide element (19) is manufactured in one piece.

7. Axial piston machine according to one of the preceding claims,
**characterised in that**
the guide element (19) is made of metal, in particular steel.

8. Axial piston machine according to claim 7,
**characterised in that**
the guide element (19) is bent from a wire.

9. Axial piston machine according to one of the preceding claims,
**characterised in that**
in a retracted zero position of the swivelling swivel bearing part (13c) the guide element (19) and the slide guide (24) extend radially in relation to the swivel axis (13a).

10. Axial piston machine according to one of the preceding claims,
**characterised in that**
bearing surfaces (13d, 13e) which are in each case curved in the form of an arc of a circle and have cage segments (15) arranged between them, are arranged on both sides of a shaft (3) which is mounted in the housing (4) so as to be able to turn and passes through the swash plate (12) in a through-hole (16), and the cage segments (15) are guided by guide elements (19) which are arranged laterally reversed in relation to one another.

## Revendications

1. Machine à pistons axiaux (1) du type à plateau incliné, comprenant une première partie de palier de pivotement (13b) s'appuyant sur un carter, et une deuxième partie de palier de pivotement (13c), qui est montée de manière pouvoir pivoter par rapport à ladite première partie de palier autour d'un axe de pivotement (13a), et qui forme un plateau incliné (12), machine dans laquelle les parties palier de pivotement (13b, 13c) présentent, sur des côtés mutuellement en regard l'un de l'autre, des surfaces de palier (13d, 13e) à courbure en secteur d'arc de cercle entre lesquelles est agencé un interstice (14), dans lequel est monté, également de manière à pouvoir pivoter autour de l'axe de pivotement (13a), un segment de cage (15) avec plusieurs corps roulants (13f), ,
dans laquelle le segment de cage (15) est guidé par un élément de guidage (19) allongé, qui s'étend transversalement à l'interstice (14) et dépasse de l'interstice (14),
dans laquelle l'élément de guidage (19) est relié de manière pivotante, respectivement par un palier de rotation (21, 22), au segment de cage (15) et à l'une des parties de palier de pivotement (13c), et
dans laquelle l'élément de guidage (19) est relié de manière coulissante dans sa direction longitudinale, par l'intermédiaire d'un guidage longitudinal (23), au segment de cage (15), dans la zone de son palier de rotation (22) relié au segment de cage (15), et est relié de manière rotative et non coulissante dans sa direction longitudinale, à ladite une partie de palier de pivotement (13c), dans la zone de son extrémité reliée à ladite une partie de palier de pivotement (13c), par le palier de rotation (21) associé,
**caractérisée**
**en ce que** l'élément de guidage (19) présente à l'une de ses extrémités, une tête de guidage ronde (19c) par laquelle il est monté pivotant dans un guidage à coulisse (24), qui est agencé sur une autre partie de palier de pivotement (13b) ou des pièces rapportées sur celle-ci, et l'élément de guidage (19) est relié de manière rotative et non coulissante dans sa direction longitudinale, à la partie de palier de pivotement (13c) pivotante et formant le plateau incliné (12), et au moins deux éléments de guidage (19) sont agencés de manière angulairement décalée l'un par rapport à l'autre dans la direction de pivotement.

2. Machine à pistons axiaux selon la revendication 1,
**caractérisée**
**en ce que** le palier de rotation (22) agissant entre l'élément de guidage (19) et ladite une partie de palier de pivotement (13c), est formé par un trou de palier (21a), qui s'étend dans ladite une partie de palier de pivotement (13c) sensiblement de manière parallèle à l'axe de pivotement (13a), et dans lequel est montée pivotante une branche de palier (19b) faisant saillie transversalement de l'élément de guidage (19).

3. Machine à pistons axiaux selon la revendication 1 ou la revendication 2,
**caractérisée**
**en ce que** la tête de guidage (19c) est formée par un anneau ou un boucle de forme annulaire.

4. Machine à pistons axiaux selon l'une des revendications précédentes,
**caractérisée**
**en ce que** le palier de rotation (22) agissant entre l'élément de guidage (19) et le segment de cage (15), est formé par un tourillon de rotation (2a), qui fait saillie du segment de cage (15), est monté rotatif dans le segment de cage (15), et dans lequel est agencé un trou de guidage (22b) d'étendue transversale, dans lequel est guidé l'élément de guidage (19) en coulissement alternatif dans sa direction longitudinale.

5. Machine à pistons axiaux selon l'une des revendications précédentes,
**caractérisée**
**en ce que** l'élément de guidage (19) est réalisé sous la forme d'une broche prismatique, de préférence de section transversale ronde, qui s'étend de manière rectiligne entre la tête de guidage (19c) et le palier de rotation (21) par lequel il est relié à ladite une partie de palier de pivotement (13c).

6. Machine à pistons axiaux selon l'une des revendications précédentes,
**caractérisée**
**en ce que** l'élément de guidage (19) est fabriqué d'un seul tenant.

7. Machine à pistons axiaux selon l'une des revendications précédentes,
**caractérisée**
**en ce que** l'élément de guidage (19) est réalisé en métal, notamment en acier.

8. Machine à pistons axiaux selon la revendication 7,
**caractérisée**
**en ce que** l'élément de guidage (19) est réalisé par cintrage d'un fil ou d'un tige.

9. Machine à pistons axiaux selon l'une des revendications précédentes,
**caractérisée**
**en ce que** dans une position nulle de pivotement de la partie de palier de pivotement (13c) pivotante, l'élément de guidage (19) et le guidage à coulisse (24) s'étendent radialement par rapport à l'axe de pivotement (13a).

10. Machine à pistons axiaux selon l'une des revendications précédentes,
**caractérisée**
**en ce que** des deux côtés d'un arbre (3), qui est monté rotatif dans le carter (4) et traverse le plateau incliné (12) dans un trou de passage (16), sont agencées respectivement des surfaces de palier (13d, 13e) d'une courbure en forme de secteur d'arc de cercle, entre lesquelles sont agencés des segments de cage (15), et les segments de cage (15) sont guidés par des éléments de guidage (19) agencés de manière mutuellement symétrique par réflexion.
